# DEMANDE DE BREVET EUROPEEN

(11) **EP 1 039 738 A1**
(43) Date de publication de la demande: **27.09.2000**
(21) Numéro de dépôt: 00400726.6
(22) Date de dépôt: 16.03.2000
(51) Int. Cl.: H04N 1/00

(54) **Procédé de transmission de télécopies entre deux télécopieurs reliés à un réseau de transmission de données**

(30) Priorité: 16.03.1999 FR 9903206
(71) Demandeur: SAGEM SA, 75116 Paris (FR)
(72) Inventeur: Omgba, Louis-Bede, 95280 Jouy Le Moutier (FR)
(74) Mandataire: Bloch, Gérard

(57) **Abrégé**

Selon le procédé de transmission d'un paquet de données de télécopie entre un premier et un second télécopieur à travers un réseau de transmission, procédé dans lequel le premier télécopieur émet les données destinées au second télécopieur et réitère son émission en l'absence de réponse dans un délai prédéterminé (T), on saisit le paquet du premier télécopieur et son instant d'émission, on transmet le paquet au second télécopieur, on saisit une réponse du second télécopieur et l'instant de réception correspondant, on détermine l'intervalle de temps entre l'instant de réception et l'expiration du délai (T),s'il est supérieur à un seuil (P), on retransmet la réponse du second télécopieur au premier, sinon on la bloque.

## Description

La transmission d'une télécopie entre deux télécopieurs est effectuée selon un protocole d'échange de données qui permet de tolérer les retards de transmission que présente le réseau téléphonique commuté (RTC).

Ainsi, lorsque l'un des télécopieurs émet des données vers l'autre, il arme un circuit de temporisation, qu'il désarme s'il reçoit une réponse avant expiration du délai de temporisation. En l'absence de réponse dans le délai de temporisation, le télécopieur émetteur considère que les données émises ont été perdues et il effectue une nouvelle émission selon le même processus.

Cependant, il peut se produire que les deux télécopieurs soient reliés à un réseau qui présente des temps de propagation plus élevés que ceux du RTC, comme par exemple un réseau de radiotéléphonie cellulaire. De plus, dans ce dernier cas par exemple, il faut prévoir un adaptateur entre la sortie filaire du télécopieur et le réseau radio, ce qui augmente encore le temps de propagation.

En pareil cas, le temps de propagation aller et retour entre les deux télécopieurs est de l'ordre de grandeur du délai de temporisation et la réception tardive des réponses entraîne de fréquentes répétitions des émissions. De plus, il arrive souvent que la réponse revienne au moment de la réémission des données, si bien que cette réémission est perturbée et doit à nouveau être recommencée.

Il est exclu de modifier le protocole en augmentant la durée de la temporisation, car cela allongerait inutilement les temps de communication dans le cas classique, à travers le RTC.

La présente invention vise à proposer une solution au problème ci-dessus lié aux réponses tardives, tout en évitant de modifier le protocole.

A cet effet, l'invention concerne un procédé de transmission de données de télécopie entre un premier et un second télécopieur à travers un réseau de transmission de données, procédé dans lequel le premier télécopieur émet les données de télécopie destinées au second télécopieur et réitère son émission en l'absence de réponse dans un délai prédéterminé, procédé caractérisé par le fait que
- on saisit le paquet de données émis par le premier télécopieur et son instant d'émission,
- on transmet le paquet de données au second télécopieur par le réseau,
- on saisit une réponse du second télécopieur et l'instant de réception correspondant
- on détermine l'intervalle de temps entre ledit instant de réception et l'expiration dudit délai suivant ledit instant d'émission,
- on compare ledit intervalle de temps à un seuil de retransmission et, si ledit intervalle est supérieur au seuil,
- on retransmet la réponse du second télécopieur au premier, sinon on la bloque.

Ainsi, on évite tout risque de collision entre une émission du premier télécopieur et une réponse retransmise à celui-ci, si bien qu'il fonctionne dans de bonnes conditions.

Avantageusement, si ledit intervalle est inférieur au seuil et qu'on saisit une deuxième fois le paquet de données émis par le premier télécopieur, on annule la transmission de ce deuxième paquet.

On évite ainsi une transmission sur le réseau devenue inutile par la réception de la réponse.

L'invention sera mieux comprise à l'aide de la description suivante d'un mode de mise en oeuvre préféré du procédé de l'invention, en référence au dessin annexé, sur lequel :
- la figure 1 est un schéma fonctionnel par blocs représentant un télécopieur relié, par un adaptateur, à un combiné de radiotéléphonie GSM, pour la mise en oeuvre du procédé de l'invention, et
- la figure 2 est un diagramme temporel, en fonction du temps t, illustrant le procédé.

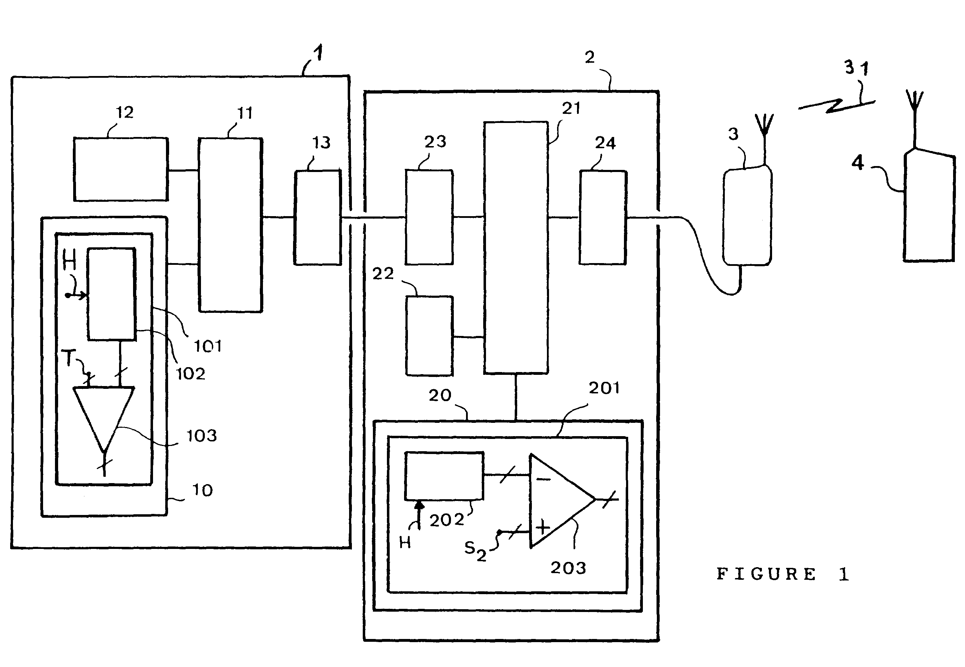

Sur la figure 1 est représenté un télécopieur classique 1 relié à un combiné 3 du réseau de radiotéléphonie cellulaire GSM 31, à travers un adaptateur 2 de format de transmission des données de télécopie.

Le télécopieur 1 comporte une base de temps 10, avec un circuit temporisateur 101, reliée à un microprocesseur 11 qui commande les divers circuits du télécopieur et en particulier est relié à un bloc 12 de traitement du protocole T 30 de télécopie et à des circuits classiques 13 d'interface de ligne téléphonique, de prise de ligne et d'échange de données, comportant en particulier un modem. Dans un but de clarté, les autres circuits classiques du télécopieur 1 n'ont pas été représentés.

L'adaptateur 2 comporte une base de temps 20, avec un circuit temporisateur 201, reliée à un microprocesseur 21 qui est lui-même relié à un bloc 22 de traitement des échanges de données de télécopie, et à deux circuits d'interface 23 et 24, d'échange de données, respectivement reliés au circuit d'interface téléphonique 13 et à un connecteur du combiné 3. Le circuit d'interface 23 est semblable au circuit 13 et le circuit d'interface 24 permet un échange bidirectionnel de données à des niveaux logiques avec le combiné 3, à travers un connecteur de celui-ci.

Le télécopieur 1 peut ainsi, à travers le réseau GSM 31, échanger des télécopies avec un autre télécopieur 4 (représenté très schématiquement comme un terminal radio), relié de même au réseau GSM ou relié au réseau téléphonique commuté RTC ou à tout autre réseau lui-même relié au réseau GSM 31.

Le procédé de transmission de télécopies entre les deux télécopieurs 1 et 4 va maintenant être expliqué.

Après un appel téléphonique classique par envoi de numérotation dans le réseau GSM 31 depuis le circuit d'interface téléphonique 13, et ainsi établissement d'une liaison radiotéléphonique, les échanges de données concernent tout d'abord des données de signalisation pour établir une liaison logique entre les deux télécopieurs 1, 4, liaison destinée à transmettre les données représentant l'image du document de télécopie.

A chaque réception de données par l'adaptateur 2 (tonalités ou trames), d'un côté ou de l'autre de celui-ci, ce dernier transforme ces données, avant de les retransmettre de l'autre côté, pour qu'elles soient compatibles avec le circuit d'interface téléphonique 13 ou le combiné 3 qui va les recevoir. Il s'ensuit un certain retard, qui s'ajoute au retard ou délai de transmission dans le réseau GSM 31.

Ainsi, dans le cas pour lequel le télécopieur 1 est émetteur de la télécopie, il reçoit du télécopieur 4, en réponse à son appel téléphonique, le signal CED à 2,1 kHz pendant plus de 3 secondes, le signal DIS d'identification de l'appelé, et émet le signal DCS, indiquant sa vitesse de fonctionnement, ainsi que des signaux d'essai de vitesse.

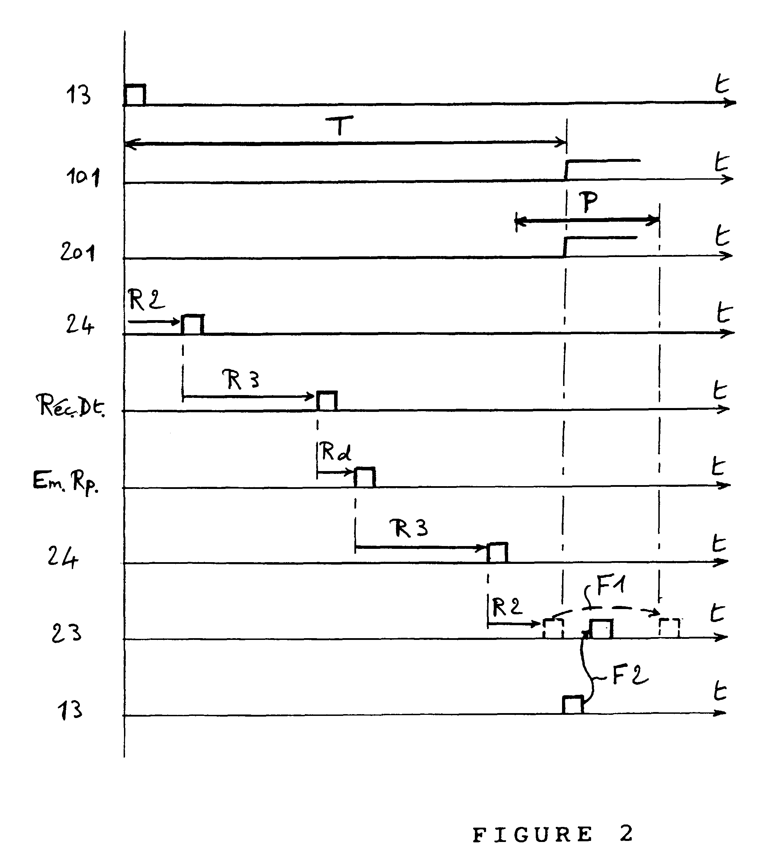

Le circuit temporisateur 101, ou temporisation, est armé lorsqu'un paquet de données de télécopie, signalisation ou trame de données d'image, est émis vers le réseau 31 et désarmé en cas de réception d'une réponse de l'autre télécopieur 4, distant, dans un délai prédéterminé de temporisation T (fig. 2), l'émission étant répétée si le circuit temporisateur 101 arrive à expiration. Dans l'adaptateur 2, on saisit les paquets de données émis par le télécopieur associé 1, on en saisit aussi l'instant de réception, d'après les signaux de la base de temps 20, et on transmet le paquet de données sur le réseau GSM 31, et, en cas de réception d'une réponse provenant de l'autre télécopieur 4, on saisit cette réponse et l'instant de réception de celle-ci, d'après les signaux de la base de temps 20. On détermine alors l'intervalle de temps entre cet instant de réception de la réponse et l'expiration du délai T, qui a commencé à s'écouler à partir de l'instant mémorisé de réception, dans l'adaptateur 2, du paquet de données du télécopieur 1 qui ont été transmis sur le réseau 31. On compare cet intervalle de temps à un seuil de retransmission P et, si cet intervalle de temps est supérieur au seuil P, on retransmet la réponse du télécopieur 4 au télécopieur local 1, sinon on la bloque en temporisant alors la retransmission de la réponse vers le télécopieur 1.

On notera que l'état précis du circuit temporisateur 201 est accessible en lecture, c'est-à-dire que, outre l'information binaire indiquant que la temporisation a expiré, on peut aussi connaître le temps restant à courir avant expiration, ceci au moins dans la partie de la plage de temps prédéterminée P de seuil de retransmission précédant l'instant de cette expiration. En pratique ici, les circuits temporisateurs 101 et 201 sont numériques, à base de compteurs 102, respectivement 202, dont on peut lire l'état des divers étages et qui sont commandés par un signal d'horloge H de fréquence déterminée. Un comparateur 103, respectivement 203, compare la sortie du compteur 102, respectivement 202, à une valeur de seuil de temporisation, et bloque, par une liaison de rétroaction non représentée, le signal d'horloge H lorsque la valeur de seuil de temporisation est atteinte ou juste dépassée. La sortie à l'état actif, ici haut, du comparateur 103, 203 indique donc que le délai T de la temporisation a au moins été atteint. Le seuil de temporisation vaut T pour le comparateur 103 et vaut S2 pour le comparateur 203, de valeur sensiblement égale à T, comme expliqué plus loin. La valeur T pouvant éventuellement varier d'un type de paquet de données à un autre, le bloc de traitement 22 assure en particulier la reconnaissance des signaux, tels que trames, traversant l'adaptateur 2, afin de régler la valeur S2 à la valeur de temporisation qui convient.

De préférence, comme ici, le comparateur 103, 203 est constitué par un circuit numérique soustracteur, dont le signe de la sortie change d'état lorsque le seuil de temporisation est atteint (ou dépassé d'une unité). Lorsque les compteurs 102, 202 avancent, la valeur de différence en sortie du comparateur 103, 203 fournît un nombre de périodes du signal d'horloge H qui représente l'intervalle de temps restant à courir avant la fin du délai T. Cette valeur permet donc directement de déterminer si l'adaptateur 2 peut retransmettre, au télécopieur 1, une réponse provenant du télécopieur distant 4. Si cette valeur de différence est trop faible, c'est- télécopieur 1, l'adaptateur 2 bloque, la retransmission, au télécopieur 1, de cette réponse, en la différant ou temporisant, jusqu'à ce que l'instant courant sorte de la plage P, afin d'éviter tout risque de collision avec une réémission provenant du télécopieur 1.

Dans cet exemple, dans l'adaptateur 2, lors de la réception de données provenant du télécopieur associé 1, on détermine s'il s'agit d'une réémission de données précédentes et, en pareil cas, si une réponse est en attente de retransmission vers le télécopieur associé 1, on bloque la réémission des données sur le réseau GSM 31, puisqu'elle est inutile. En d'autres termes, si ledit intervalle est inférieur au seuil de la plage P et qu'on saisit une deuxième fois le paquet de données émis par le premier télécopieur 1, on annule la transmission de ce deuxième paquet.

Pour déterminer s'il s'agit d'une réémission, les données reçues du télécopieur 1 peuvent être mémorisées et à chaque fois comparées aux précédentes. En cas d'égalité, il s'agit donc d'une réémission. On peut encore déterminer qu'il s'agit d'une réémission en mémorisant les alternances d'émissions et de réceptions de l'adaptateur 2, côté télécopieur associé 1. En effet, le protocole T 30 fonctionne à l'alternat, si bien qu'une émission, hormis la première, intervient toujours en réponse à une réception de données. Il n'y a pas d'émission spontanée de nouvelles données. Toute rupture de l'alternance régulière des échanges, un par un, indique une réémission de données déjà émises.

Afin d'éviter de différer inutilement la retransmission de la réponse vers le télécopieur 1, quand on saisit dans le délai T un deuxième paquet de données émis par le premier télécopieur 1 et qu'on avait préalablement bloqué la réponse du second télécopieur 4, on retransmet, aussitôt après, cette réponse au premier télécopieur 1, puisque tout risque de collision a donc disparu, le circuit temporisateur 101 venant juste d'être réarmé.

La figure 2 illustre le procédé. Les chiffres de gauche indiquent le circuit qui émet ou reçoit le signal représenté.

Le télécopieur 1 arme le circuit temporisateur 101, en libérant le signal d'horloge H, et émet, par le circuit d'interface téléphonique 13, un paquet de données qui est reçu et mémorisé par l'adaptateur 2. Celui-ci arme de même le circuit temporisateur 201, de même durée de temporisation que le circuit temporisateur 101, et retransmet le paquet de données, adapté, au combiné 3, par le circuit d'interface combiné 24, avec un retard R2, d'adaptation (circuit 24). L'armement du circuit temporisateur 201 équivaut à une saisie de l'instant de réception du paquet. Le combiné 3 émet le paquet sur le réseau 31 et le télécopieur récepteur distant 4 reçoit (Réc. Dt) le paquet de données après le retard supplémentaire R3 "réseau", de traversée du combiné 3 et du réseau GSM 31, et émet sa réponse (Em. Rp.) avec un retard Rd, auquel s'ajoute le retard R3 du réseau GSM 31 et du combiné 3 lorsque l'adaptateur 2 (circuit 24) reçoit la réponse. Cette dernière est alors adaptée et, avant de la retransmettre (circuit 23) au télécopieur 1, l'état du circuit temporisateur 201, sensiblement image du temporisateur 101, est lu pour déterminer si l'instant présent est dans la plage P de risque de collision, dans laquelle expire la temporisation du circuit 101. C'est le cas dans l'exemple de la figure 2, où la transmission prévue de la réponse (bloc en pointillé suivant le retard Rd) est dans la plage P. La retransmission de la réponse du télécopieur distant au télécopieur 1 est alors différée et ainsi bloquée. La flèche F1 indique le retard prévu pour la retransmission de la réponse, c'est-à-dire pointe l'instant de fin de la plage P. Le télécopieur 1 effectuant ici une réémission (circuit 13, ligne du bas de la fig. 2), juste après l'expiration de la temporisation du circuit 101, du paquet déjà émis, l'adaptateur 2 effectue alors (flèche F2) la retransmission de la réponse vers le télécopieur 1, sans attendre que l'instant courant soit sorti de la plage P, puisqu'une collision n'est plus à craindre.

Comme indiqué plus haut, l'instant d'expiration de la temporisation T du circuit 101 se trouve, dans cet exemple, dans la plage P et non pas en fin de plage P, afin de garantir une marge de sécurité contre des variations incontrôlées de la valeur de temporisation T. De ce fait, sur la figure 2, la plage P représente la somme de la valeur de seuil de retransmission, qui est la longueur de la portion située avant la remontée des signaux de sortie des circuits 101 et 201 qui viennent à expiration, et de la marge de sécurité ci-dessus.

Dans le cas pour lequel le temps de transit, ou retard R2, à travers l'adaptateur 2 n'est pas négligeable devant la durée T, il peut alors être utile de le compenser vis-à-vis du télécopieur distant 4. Cela revient à intégrer ensemble fonctionnellement, pour les échanges à travers le réseau 31, le télécopieur 1 et l'adaptateur 2, en ayant, pour les échanges côté réseau 31, un deuxième circuit temporisateur dans l'adaptateur 2, retardé de R2 par rapport au circuit 101, et masquant donc le retard R2 vis-à-vis du télécopieur distant 4. On émule ainsi, pour le télécopieur distant 4, le réseau téléphonique commuté, en masquant l'effet retardateur (R2) de l'adaptateur 2. Les échanges locaux entre le télécopieur 1 et l'adaptateur 2 peuvent de même être gérés par des temporisations, c'est-à-dire que l'adaptateur 2 fait fonction de télécopieur intermédiaire de relayage, la liaison entre le télécopieur 1 et le télécopieur distant 4 étant donc en deux tronçons : local et réseau 31. L'adaptateur 2 dispose alors, dans le bloc 22, des moyens nécessaires à la gestion totale du protocole T 30.

Comme évoqué ci-dessus, il peut être prévu d'intégrer physiquement en un seul ensemble le télécopieur 1, l'adaptateur 2 et même le combiné 3 pour constituer un télécopieur à liaison radio.

Comme l'adaptateur 2 peut mesurer le retard R3 + Rd + R3 entre une émission sur le réseau 31, vers le télécopieur distant 4, et la réponse, il peut en estimer le temps de traversée R3 du réseau 31 puisque le retard Rd a une valeur qui peut être connue puisqu'elle est propre aux télécopieurs. De ce fait, l'adaptateur 2 recevant des données du télécopieur distant 4 à un instant donné, peut en déduire que le circuit temporisateur de celui-ci, semblable au circuit 101, a une durée restant à courir qui vaut T-R3. L'adaptateur 2 peut alors armer un circuit temporisateur réglé à la valeur T-R3. Lorsque l'adaptateur 2 doit répondre au télécopieur distant 4, cette réponse est retardée si le circuit temporisateur ci-dessus indique qu'il reste à courir une valeur de temps sensiblement (cf. plage P) égale à R3, c'est-à-dire qu'il y aurait collision de la réponse, à son arrivée au télécopieur distant 4, avec une réémission de celui-ci. Les principes exposés plus haut pour les échanges entre l'adaptateur 2 et le télécopieur associé 1 sont donc aussi applicables aux échanges entre l'adaptateur 2 et le télécopieur distant 4.

## Revendications

1. Procédé de transmission d'un paquet de données de télécopie entre un premier (1) et un second (4) télécopieur à travers un réseau (31) de transmission de données, procédé dans lequel le premier télécopieur (1) émet les données de télécopie destinées au second télécopieur (4) et réitère son émission en l'absence de réponse dans un délai prédéterminé (T), procédé caractérisé par le fait que
- on saisit le paquet de données émis par le premier télécopieur (1) et son instant d'émission,
- on transmet le paquet de données au second télécopieur (4) par le réseau (31),
- on saisit une réponse du second télécopieur (4) et l'instant de réception correspondant,
- on détermine l'intervalle de temps entre ledit instant de réception et l'expiration dudit délai (T) suivant ledit instant d'émission,
- on compare ledit intervalle de temps à un seuil de retransmission (P) et, si ledit intervalle est supérieur au seuil (P),
- on retransmet la réponse du second télécopieur (4) au premier (1), sinon on la bloque.

2. Procédé selon la revendication 1, dans lequel, si ledit intervalle est inférieur au seuil et qu'on saisit une deuxième fois le paquet de données émis par le premier télécopieur (1), on annule la transmission de ce deuxième paquet.

3. Procédé selon l'une des revendications 1 et 2, dans lequel, quand on saisit dans ledit délai (T) un deuxième paquet de données émis par le premier télécopieur (1) et qu'on avait préalablement bloqué la réponse du second télécopieur (4), on retransmet aussitôt après cette réponse au premier télécopieur (1).
